# FASCICULE DE BREVET EUROPEEN

(11) **EP 2 493 791 B1**
(45) Date de publication et mention de la délivrance du brevet: **03.07.2013**
(21) Numéro de dépôt: 10776766.7
(22) Date de dépôt: 29.09.2010
(51) Int. Cl.: B65G 47/91, B29C 49/42

(54) **DISPOSITIF DE PREHENSION D'UN RECIPIENT**
VORRICHTUNG ZUM GREIFEN EINES BEHÄLTERS
DEVICE FOR GRIPPING A CONTAINER

(30) Priorité: 26.10.2009 FR 0957499
(43) Date de publication de la demande: 05.09.2012
(73) Titulaire: Sidel Participations, 76930 Octeville sur Mer (FR)
(72) Inventeur: FEUILLOLEY, Guy, F-76930 Octeville-sur-Mer (FR)
(74) Mandataire: Cabinet Plasseraud
(86) Numéro de dépôt international: PCT/FR2010/052054
(87) Numéro de publication internationale: WO 2011/051586

(56) Documents cités:
- DE-A1- 1 926 479
- DE-U1-202008 003 710
- GB-A- 1 045 507

## Description

La présente invention a trait à un dispositif de préhension de récipients par leur col, selon le préambule de la revendication 1.

Un tel dispositif est décrit dans le document DE 202008003710U.

En particulier, l'invention a pour objet un dispositif permettant de convoyer des récipients par leur col, dans des installations industrielles, d'un poste à un autre.

De tels récipients peuvent être des préformes, c'est-à-dire des ébauches de récipients, qui doivent être convoyées dans des postes différents pour y subir des traitements afin d'être chauffées, déformées puis refroidies, de façon à réaliser des bouteilles, par exemple.

On connaît du document JP 11 100119 un dispositif de préhension d'une préforme, qui assure la saisie d'une préforme par aspiration, en générant un vide dans son corps.

Pour ce faire, le dispositif comprend une tête de préhension qui comporte :
- une surface de contact sensiblement en forme de rondelle, afin de s'adapter à différents diamètres de col de récipient, apte à assurer un contact étanche sur le buvant du col dudit récipient,
- et des moyens pour générer une dépression à l'intérieur du récipient.

Une telle tête de préhension est réalisée rigide. Elle peut présenter certains inconvénients lorsque les préformes sont animées d'un mouvement de balancier, par exemple lorsque la machine de convoyage s'arrête brusquement. Un tel arrêt brusque peut entraîner le décollement du buvant des préformes, et donc une entrée d'air rompant le vide interne des préformes saisies. La conséquence d'un tel phénomène est le détachement des préformes.

On a donc tenté de saisir des préformes avec des dispositifs plus souples, tels que des ventouses du type en forme de cloche.

Avec de telles ventouses en forme de cloche, les buvants de préformes présentant des diamètres différents sont saisis à différents niveaux dans la cloche.

De telles variations dans le référentiel de préhension peuvent poser des problèmes de réglage de machine outil.

On connait du document allemand DE 1 926 479, ainsi que du document DE 20 2008 003710, un dispositif de préhension tel que décrit précédemment et qui comprend une surface de contact plane, des moyens pour générer une dépression à l'intérieur du récipient et deux plateaux en combinaison, l'un des plateaux étant rigide, l'autre étant déformable.

A l'origine de l'invention, on a cherché à mettre au point un autre dispositif de préhension, utilisant également la technique de saisie des préformes par aspiration et assurant une plus grande souplesse d'adaptation à des cols de récipients de diamètres différents, même lors des phases vibratoires, c'est-à-dire lors des phases où les préformes sont animées d'un léger mouvement de balancier lorsqu'elles sont suspendues par leur col.

L'invention concerne à cet effet un dispositif de préhension d'un récipient par son col, comprenant une tête de préhension qui comporte :
- une surface de contact plane, apte à assurer un contact étanche sur un buvant dudit col dudit récipient,
- et des moyens pour générer une dépression à l'intérieur du récipient,
- le dispositif comportant, en combinaison, un plateau rigide et un plateau déformable, ledit plateau déformable étant apposé contre une surface dudit plateau rigide et étant apte à assurer un contact étanche avec le buvant et à présenter une surface de contact plane pour le buvant du récipient.

Conformément à l'invention, le dispositif est remarquable en ce que le plateau déformable communique avec l'extérieur de ladite tête de préhension, de l'autre côté dudit plateau rigide, par au moins un évent qui traverse ledit plateau rigide.

Ainsi conçu, le dispositif conforme à l'invention pallie tous les inconvénients de l'état de la technique présenté ci-dessus : le plateau assure un référentiel de préhension qui se trouve sensiblement toujours au même niveau, peu importe le diamètre du buvant du récipient à saisir, et le plateau déformable autorise un mouvement de balancier du récipient avec moins de risques de décollement du buvant de ce dernier.

Par ailleurs, comme le plateau déformable communique avec l'extérieur de ladite tête de préhension, de l'autre côté dudit plateau, par au moins un évent qui traverse ledit plateau, quand un vide est généré dans le récipient, le plateau se déforme à l'intérieur du récipient, par appel d'air à travers le (ou les) évent(s), ce qui permet de réduire les mouvements de balancier du récipient.

Le dispositif selon l'invention peut également comporter les caractéristiques suivantes, prises séparément ou en combinaison :
- ledit au moins un évent débouche au voisinage d'une partie centrale du plateau rigide ;
- les moyens pour générer une dépression comportent un dispositif de génération de vide relié à un conduit ménagé à travers le plateau rigide, le conduit communiquant avec un canal traversant axial, ménagé dans le plateau déformable, le canal étant apte à déboucher dans le récipient pour permettre d'y générer un vide ;
- le plateau déformable comporte des moyens de fixation amovibles sur le plateau rigide ;
- les moyens de fixation amovibles sont réalisés par une bordure périphérique sensiblement en forme de U, formant une gorge annulaire de précontrainte apte à accueillir un bord latéral du plateau rigide ;
- le plateau rigide et le plateau déformable sont solidarisés de manière amovible par une vis ;
- le plateau rigide présente une surface plane contre laquelle est apposé le plateau déformable ;
- le plateau déformable est réalisé en silicone.

Pour pouvoir être exécutée, l'invention est exposée de façon suffisamment claire et complète dans la description suivante qui est, en plus, accompagnée de dessins dans lesquels :
- la figure 1 montre, vu en coupe, un dispositif conforme à l'invention, appliqué contre le buvant d'un col d'une préforme, ladite préforme n'étant représentée que partiellement,
- la figure 2 montre le dispositif de la figure 1, vu en coupe, après génération d'un vide dans la préforme,
- la figure 3 montre le dispositif des figures 1 et 2, vu en coupe, après génération d'un vide dans la préforme, la préforme subissant un stress latéral,
- la figure 4 montre le dispositif des figures 1 à 3, vu en coupe, appliqué sur le buvant d'un col d'une autre préforme, le col de cette préforme présentant un diamètre différent de celui du col de la préforme qui est illustrée sur les figures 1 à 3.

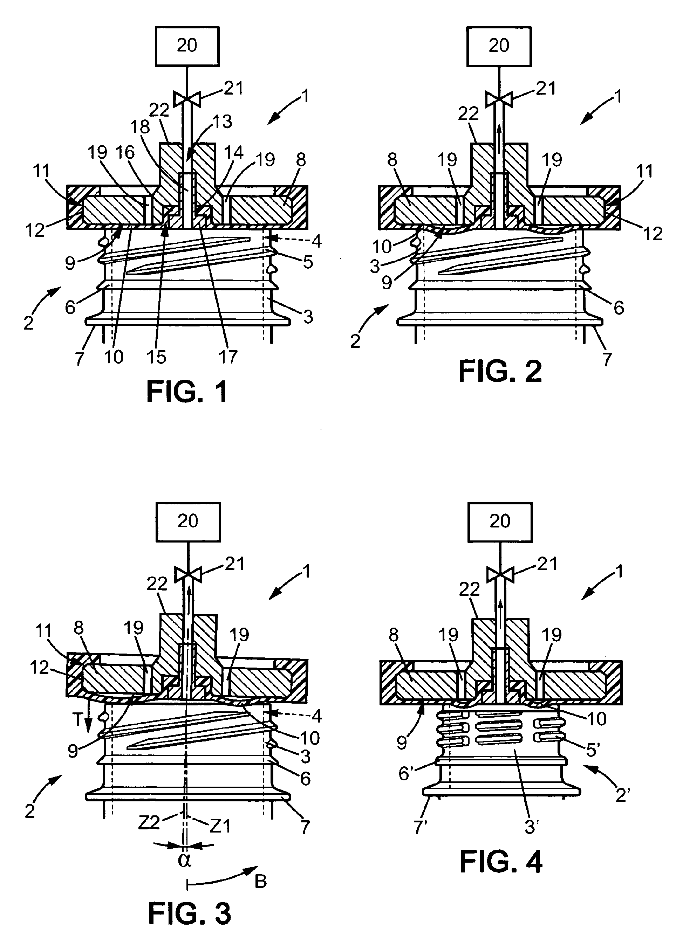

La figure 1 montre un dispositif de préhension conforme à l'invention, comprenant une tête 1 conçue pour la préhension d'une préforme 2 par son col 3.

En particulier, la tête 1 de préhension est conçue pour saisir par aspiration la préforme 2 en étant appliquée sur son buvant 4, c'est-à-dire l'extrémité du col 3 qui est ouverte vers l'extérieur de la préforme.

On voit sur la figure 1 que le col 3 de la préforme 2 comporte un double filet 5 saillant de sa surface extérieure, pour permettre le vissage d'un bouchon fileté.

Le col 3 présente également deux anneaux 6 et 7 saillant de sa surface extérieure, réalisés sous le double filet 5 et permettant, notamment, la préhension des préformes 2 par des pinces, ou bien encore leur positionnement sur des rails, de manière à convoyer les préformes 2 d'un poste à un autre dans une installation de fabrication de bouteilles, par exemple.

La figure 4 montre partiellement une autre préforme 2', de diamètre plus petit que le diamètre de la préforme 2 qui est illustrée partiellement sur les autres figures.

On notera que la tête 1 conforme à l'invention s'applique sur toutes les préformes, pourvu que le diamètre de ces dernières soit inférieur au diamètre de la tête 1 de préhension.

La préforme 2' présente également deux anneaux saillants 6' et 7' sur son col 3', et un unique filet saillant 5', enroulé sur plusieurs tours autour du col 3', et séquencé en plusieurs morceaux par des coupures qui sont parallèles à l'axe de la préforme 2'. Une telle préforme est destinée, par exemple, à la réalisation d'une bouteille pour boissons carbonatées.

La tête 1 de préhension conforme à l'invention comporte un plateau 8 rigide de contour circulaire, présentant une certaine épaisseur (quelques millimètres), de manière à former un noyau rigide en forme de galette.

Le plateau 8 rigide présente une surface 9 sensiblement plane, contre laquelle est apposé un plateau 10 réalisé dans un matériau souple, tel qu'un élastomère, par exemple le silicone, de sorte que le plateau 10 soit déformable.

Le plateau 10 déformable présente un diamètre sensiblement identique à celui du plateau 8 rigide et s'applique contre cette dernière par tension de l'élastomère.

De plus, le plateau 10 déformable présente une bordure 11 périphérique, de section sensiblement en forme de U, apte à accueillir un bord 12 latéral du plateau 8 rigide formant le noyau rigide de la tête 1 de préhension.

Le plateau 10 déformable présentant la bordure 11 forme ainsi une capsule qui est déformable et qui est placée sur le plateau 8 rigide en insérant le bord 12 latéral du plateau 8 rigide dans la bordure 11, de sorte que la capsule présente une surface qui recouvre entièrement la surface du plateau 8 rigide et qui s'applique contre cette dernière.

Le plateau 10 déformable forme la partie de la capsule qui recouvre la surface 9 plane du plateau 8 rigide.

Le plateau 10 déformable présente une surface de contact plane pour le buvant d'une préforme 2 ou 2'.

Les avantages d'une telle surface plane de recouvrement seront exposés par la suite.

L'épaisseur du plateau 10 déformable est plus petite que l'épaisseur de la bordure 11. De cette manière, le plateau 10 déformable se déforme plus facilement que la bordure 11 fixée autour du bord 12 du plateau 8 rigide. Le plateau 10 déformable peut donc ainsi se déformer avec un moindre risque, voire un risque quasi nul, de décrochement de la bordure 11 du bord 12 du plateau 8 rigide.

De plus, le plateau 10 déformable est fixé sur le plateau 8 rigide (formant noyau) de façon amovible, par l'intermédiaire d'une vis 17. Ceci permet de remplacer le plateau 10 déformable lorsque ce dernier présente des signes de fatigue, tels qu'une usure liée à de multiples déformations (détente irréversible du plateau 10 déformable par exemple).

Pour ce faire, le plateau 8 rigide comporte, dans son axe, un conduit 13 qui est creux et fileté.

Le conduit 13 débouche d'un côté du plateau 8 rigide. Il traverse le plateau 8 rigide ainsi qu'un plot 22 central, solidaire du plateau 8 rigide et axial.

Le plot 22 central est cylindrique et peut, par exemple, servir au raccordement de la tête de préhension 1 à un mécanisme annexe au dispositif conforme à l'invention.

Le plateau 10 déformable présente une ouverture 14 traversante axiale, venant au droit du conduit 13 creux fileté du plateau 8 rigide quand le plateau 10 déformable est positionné sur le plateau 8 rigide.

Plus précisément, le plateau 10 déformable présente, en son centre, une partie saillante, en forme de cheminée 15, traversée par l'ouverture 14. Ainsi, la partie du plateau 10 déformable qui est plane et qui est apposée contre la surface du plateau 8 rigide présente sensiblement une forme de rondelle.

Cette forme de rondelle permet de positionner la tête 1 de préhension conforme à l'invention sur des buvants 4 de préformes 2 et 2' présentant des diamètres différents.

Par ailleurs, la réalisation du plateau 10 déformable en élastomère assure un contact étanche de la tête 1 de préhension sur le buvant 4 d'une préforme 2.

La cheminée 15 présente, à son extrémité, un épaulement 16 interne.

Le plateau 10 déformable est fixé sur le plateau 8 rigide par la vis 17.

La vis 17 présente une tige filetée dont le diamètre correspond à celui du conduit 13 du plateau 8 rigide et à celui de l'ouverture 14 du plateau 10 déformable.

Ainsi, pour fixer le plateau 10 déformable sur le plateau 8 rigide, la vis 17 est vissée dans le conduit 13 jusqu'à ce que sa tête prenne appui contre l'épaulement 16 de la cheminée.

La vis 17 est une vis creuse, qui présente un canal 18 axial traversant.

Quand la vis 17 est en position dans le conduit 13, son canal 18 assure un passage entre le conduit 13 et l'extérieur de la tête de la vis. Plus particulièrement, quand la tête 1 de préhension est en position sur le buvant d'une préforme 2 à prélever, le canal 18 de la vis assure un passage entre le conduit 13 et l'intérieur de la préforme. On peut ainsi générer un vide dans la préforme en raccordant le conduit 13 à une pompe 20, par exemple, ou tout autre moyen pour générer une dépression à l'intérieur du récipient.

Une électrovanne 21, reliée au conduit 13, permet de remettre l'intérieur de la préforme 2 à la pression atmosphérique, notamment pour libérer la préforme 2.

Conformément à l'invention, la tête 1 de préhension est conçue de manière telle que le plateau 10 déformable, présentant la surface de contact de la tête 1 avec le buvant 4 d'une préforme 2, est déformable à l'intérieur de la préforme.

Pour ce faire, la tête 1 est dotée de moyens assurant une telle déformation.

Ces moyens sont constitués par au moins un évent 19, et dans le cadre de ce mode de réalisation deux évents 19, traversant le plateau 8 rigide dans son épaisseur.

Il devra être entendu que, sans sortir du cadre de l'invention, les moyens pourraient comprendre une succession d'évents 19 répartis tout autour du plot central.

Ainsi, les évents 19 débouchent d'un côté du plateau 8 rigide contre le plateau 10 déformable, et de l'autre côté du plateau 8 rigide vers l'extérieur de la tête 1 de préhension.

Les deux évents 19 sont ménagés de part et d'autre du conduit 13 et le plus près possible du centre du plateau 8 rigide, de manière à ce que la tête 1 de préhension puisse saisir des préformes 2 dont les cols 3 présentent de petits diamètres (voir en particulier la figure 4).

En effet, pour assurer la déformation du plateau 10 déformable dans la préforme 2, il faut que les évents 19 débouchent sur une partie du plateau 10 déformable qui se trouve dans un périmètre délimité par le buvant 4 de la préforme 2.

Le plateau 10 déformable est déformé dans la préforme de la façon suivante :
Pour saisir une préforme 2, la tête 1 de préhension est placée sur une préforme 2 en apposant le buvant 4 de la préforme 2 contre le plateau 10 déformable.

On génère alors un vide dans la préforme en actionnant la pompe 20 (voir figure 2).

Le vide généré dans la préforme 2 entraîne la déformation du plateau 10 déformable dans la préforme 2, au voisinage des évents 19, par appel d'air, l'air s'introduisant par les évents 19 entre la surface du plateau 8 rigide et le plateau 10 déformable.

Le plateau 10 déformable se déforme alors dans la préforme 2 (ou 2'), entre la cheminée 15 et le buvant 4 de la préforme.

Ainsi, la préforme 2 (ou 2') est retenue à la tête 1 de préhension par succion, et le plateau 10 déformé dans la préforme 2 (ou 2') assure un maintien de la préforme 2 (ou 2') dans l'axe Z2 de la tête 1 de préhension, en exerçant une force sur le bord interne du buvant 4 de la préforme 2 (ou 2').

En effet, la préforme 2 (ou 2') peut être animée d'un mouvement de balancier de gauche à droite (voir flèche B sur figure 3). Une telle situation peut arriver, par exemple, lorsque le convoyage des préformes, saisies par les têtes 1 de préhension, est subitement arrêté : au moment de cet arrêt, les préformes s'animent d'un mouvement de balancier.

Dans un tel cas, la force exercée par le plateau 10 déformé permet de replacer automatiquement l'axe Z1 de la préforme 2 dans l'axe Z2 de la tête 1 de préhension, comme le montre la figure 3 : quand l'axe Z1 se décale par rapport à l'axe Z2, le buvant 4 tire sur le plateau 10 déformable et le fait se décoller du bord du plateau 8 rigide (voir flèche T sur la figure 3). Toutefois, comme le plateau déformable est maintenu de façon étanche sur le bord 12 du plateau 8 rigide et sur le buvant 4, la préforme 2 ne se décroche pas et elle est ramenée en position d'équilibre, c'est-à-dire en position telle que son axe Z1 se superpose à l'axe Z2 de la tête 1 de préhension.

L'avantage d'une déformation du plateau 10 dans la préforme 2 ou 2', comparée à une déformation d'une ventouse classique (de type en forme de cloche) à l'extérieur de la préforme, est que la déformation interne ramène la préforme dans l'axe de la tête 1 de préhension. Dans le cas d'une ventouse classique du type en forme de cloche, qui se déforme à l'extérieur d'une préforme pour assurer sa préhension par aspiration, cette déformation externe n'a aucune influence sur le temps de retour de la préforme en position d'équilibre, puisque cette déformation n'exerce pas de force contraire aux forces entraînant le mouvement de balancier. Voire même, la déformation externe des ventouses peut accentuer le mouvement de balancier des préformes.

Un autre avantage de la tête 1 de préhension conforme à l'invention, par rapport à la préhension d'une préforme par une ventouse classique, est que le plateau 8 rigide recouvert du plateau 10 déformable définit un référentiel de préhension du buvant 4 des préformes, c'est-à-dire un niveau jusqu'auquel les préformes sont amenées pour être saisies, ce niveau étant toujours le même, peu importe le diamètre des préformes. En effet, ce niveau est toujours celui défini sensiblement par la surface du plateau 8 rigide, ou la surface du plateau 10 déformable, le niveau étant plat.

On comprend de la description qui précède comment l'invention permet d'atteindre les objectifs qu'elle s'était fixés, et, en particulier, comment le plateau 10 déformable autorise un léger mouvement de balancier de la préforme sans pour autant que celle-ci se décolle du plateau déformable, grâce à la réalisation du plateau en matériau souple, déformable, et au fait qu'un tel plateau déformable prenne appui contre un plateau rigide.

On comprend également comment le plateau se déforme dans la préforme, au moment de la préhension de la préforme, grâce à la présence des évents 19, ce qui permet de ramener rapidement et efficacement la préforme dans l'axe de la tête de préhension en cas de stress latéral.

Il devra toutefois être compris que l'invention ne se limite pas au mode de réalisation spécifiquement décrit, et qu'elle s'étend à la réalisation de tout moyen équivalent.

## Revendications

1. Dispositif de préhension d'un récipient (2 ; 2') par son col (3), comprenant une tête (1) de préhension qui comporte :
- une surface de contact plane, apte à assurer un contact étanche sur un buvant (4) dudit col (3) dudit récipient (2 ; 2'),
- et des moyens (13, 20) pour générer une dépression à l'intérieur du récipient (2 ; 2'),
le dispositif comportant, en combinaison, un plateau (8) rigide et un plateau (10) déformable, ledit plateau (10) déformable étant apposé contre une surface dudit plateau (8) rigide et étant apte à assurer un contact étanche avec le buvant (4) et à présenter une surface de contact plane pour le buvant (4) du récipient (2, 2'), **caractérisé en ce que** ledit plateau (10) déformable communique avec l'extérieur de ladite tête (1) de préhension, de l'autre côté dudit plateau (8) rigide, par au moins un évent (19) qui traverse ledit plateau (8) rigide.

2. Dispositif selon la revendication 1, **caractérisé en ce que** ledit au moins un évent (19) débouche au voisinage d'une partie centrale dudit plateau (8) rigide.

3. Dispositif selon la revendication 1, **caractérisé en ce que** les moyens (13, 20) pour générer une dépression comportent un dispositif (20) de génération de vide relié à un conduit (13) ménagé à travers ledit plateau (8) rigide, ledit conduit (13) communiquant avec un canal (18) traversant axial, ménagé dans ledit plateau (10) déformable, ledit canal (18) étant apte à déboucher dans le récipient (2 ; 2') pour permettre d'y générer un vide.

4. Dispositif selon l'une quelconque des revendications précédentes, **caractérisé en ce que** ledit plateau (10) déformable comporte des moyens de fixation amovibles sur ledit plateau (8) rigide.

5. Dispositif selon la revendication 4, **caractérisé en ce que** les moyens de fixation amovibles sont réalisés par une bordure périphérique (11) sensiblement en forme de U, formant une gorge annulaire de précontrainte apte à accueillir un bord (12) latéral du plateau (8) rigide.

6. Dispositif selon l'une quelconque des revendications précédentes, **caractérisé en ce que** ledit plateau (8) rigide et ledit plateau (10) déformable sont solidarisés de manière amovible par une vis (17)

7. Dispositif selon l'une quelconque des revendications précédentes, **caractérisé en ce que** ledit plateau (8) rigide présente une surface plane contre laquelle est apposé ledit plateau (10) déformable.

8. Dispositif selon l'une quelconque des revendications précédentes, **caractérisé en ce que** ledit plateau (10) déformable est réalisé en silicone.

## Patentansprüche

1. Vorrichtung zum Ergreifen eines Behälters (2; 2') an seinem Hals (3), umfassend einen Greifkopf (1), der Folgendes umfasst:
- eine ebene Kontaktfläche, die geeignet ist, einen dichten Kontakt auf einem Ausguss (4) des Halses (3) des Behälters (2; 2') herzustellen,
- und Mittel (13, 20), zur Erzeugung eines Unterdrucks im Inneren des Behälters (2; 2'),
wobei die Vorrichtung in Kombination eine starre Platte (8) und eine verformbare Platte (10) umfasst, wobei die verformbare Platte (10) an die Oberfläche der starren Platte (8) angelegt ist und geeignet ist, einen dichten Kontakt mit dem Ausguss (4) herzustellen und eine ebene Kontaktfläche für den Ausguss (4) des Behälters (2, 2') aufzuweisen, **dadurch gekennzeichnet, dass** die verformbare Platte (10) mit dem Äußeren des Greifkopfes (1) auf der anderen Seite der starren Platte (8) durch mindestens eine Öffnung (19), die durch die starre Platte (8) hindurchgeht, in Verbindung steht.

2. Vorrichtung nach Anspruch 1, **dadurch gekennzeichnet, dass** die mindestens eine Öffnung (19) in der Nähe eines zentralen Teils der starren Platte (8) mündet.

3. Vorrichtung nach Anspruch 1, **dadurch gekennzeichnet, dass** die Mittel (13, 20) zur Erzeugung eines Unterdrucks eine Vorrichtung (20) zur Vakuumerzeugung umfassen, die mit einer Leitung (13) verbunden ist, die durch die starre Platte (8) hindurch vorgesehen ist, wobei die Leitung (13) mit einem axialen durchgehenden Kanal (18), der in der verformbaren Platte (10) vorgesehen ist, in Verbindung steht, wobei der Kanal (18) geeignet ist, in dem Behälter (2, 2') zu münden, um es zu ermöglichen, in diesem ein Vakuum zu erzeugen.

4. Vorrichtung nach einem der vorhergehenden Ansprüche, **dadurch gekennzeichnet, dass** die verformbare Platte (10) Mittel zur lösbaren Befestigung auf der starren Platte (8) umfassen.

5. Vorrichtung nach Anspruch 4, **dadurch gekennzeichnet, dass** die Mittel zur lösbaren Befestigung durch einen im Wesentlichen U-förmigen Umfangsrand (11) gebildet sind, der eine ringförmige Nut zur Vorspannung bildet, der geeignet ist, einen Seitenrand (12) der starren Platte (8) aufzunehmen.

6. Vorrichtung nach einem der vorhergehenden Ansprüche, **dadurch gekennzeichnet, dass** die starre Platte (8) und die verformbare Platte (10) durch eine Schraube (17) lösbar miteinander verbunden sind.

7. Vorrichtung nach einem der vorhergehenden Ansprüche, **dadurch gekennzeichnet, dass** die starre Platte (8) eine ebene Fläche aufwiest, an die die verformbare Platte (10) angelegt ist.

8. Vorrichtung nach einem der vorhergehenden Ansprüche, **dadurch gekennzeichnet, dass** die verformbare Platte (10) aus Silikon hergestellt ist.

## Claims

1. Device for gripping a receptacle (2; 2') by its neck (3), having a gripping head (1) which comprises:
- a flat contact surface designed to establish a sealed contact on a lip (4) of said neck (3) of said receptacle (2; 2'),
- and means (13, 20) for generating a negative pressure inside the receptacle (2; 2'),
the device comprising, in combination, a rigid plate (8) and a deformable plate (10), said deformable plate (10) being placed against a surface of said rigid plate (8) and being designed to establish a sealed contact with the lip (4) and to afford a flat contact surface for the lip (4) of the receptacle (2; 2'), **characterised in that** said deformable plate (10) communicates with the exterior of said gripping head (1) on the other side of said rigid plate (8) by means of at least one vent (19) which extends through said rigid plate (8).

2. Device as claimed in claim 1, **characterised in that** said at least one vent (19) opens in the vicinity of a central part of said rigid plate (8).

3. Device as claimed in claim 1, **characterised in that** the means (13, 20) for generating a negative pressure comprise a vacuum generating device (20) connected to a duct (13) extending through said rigid plate (8), said duct (13) communicating with an axially extending passage (18) disposed in said deformable plate (10), said passage (18) being designed to open into the receptacle (2; 2') to enable a vacuum to be generated there.

4. Device as claimed in any one of the preceding claims, **characterised in that** said deformable plate (10) has displaceable fixing means on said rigid plate (8).

5. Device as claimed in claim 4, **characterised in that** the displaceable fixing means are provided in the form of a substantially U-shaped peripheral edging (11) forming an annular pre-stressing groove designed to accommodate a lateral edge (12) of the rigid plate (8).

6. Device as claimed in any one of the preceding claims, **characterised in that** said rigid plate (8) and said deformable plate (10) are joined in a displaceable arrangement by means of a screw (17).

7. Device as claimed in any one of the preceding claims, **characterised in that** said rigid plate (8) has a flat surface against which said deformable plate (10) is placed.

8. Device as claimed in any one of the preceding claims, **characterised in that** said deformable plate (10) is made from silicone.
